# DEMANDE DE BREVET EUROPEEN

(11) **EP 3 012 990 A1**
(43) Date de publication de la demande: **27.04.2016**
(21) Numéro de dépôt: 15189283.3
(22) Date de dépôt: 12.10.2015
(51) Int. Cl.: H04L 1/00

(54) **PROCÉDÉ ET SYSTÈME DE TRAITEMENT DE DONNÉES DANS UN SYSTÈME DE TÉLÉCOMMUNICATIONS POUR UNE ADAPTATION DYNAMIQUE A LA QUANTITÉ DE DONNÉES A TRANSMETTRE**

(30) Priorité: 24.10.2014 FR 1402391
(71) Demandeur: THALES, 92400 Courbevoie (FR)
(72) Inventeur: GINESTE, Mathieu, 31100 TOULOUSE (FR)
(74) Mandataire: Priori, Enrico

(57) **Abrégé**

Procédé de traitement de données dans un système de télécommunications permettant une adaptation dynamique à la quantité de données à transmettre. Les données sont organisées en un ensemble de paquets contenus dans une première couche d'un modèle de communication. Le procédé comporte une première étape de passage d'une information, indiquant la taille de chaque paquet ou représentative de cette taille, entre ladite première couche et une deuxième couche. Il comporte aussi une deuxième étape d'encapsulation du paquet et de passage du paquet entre la première couche et la deuxième couche dans un conteneur dont la taille est adaptée à ladite information indiquant la taille d'un paquet ou représentative de cette taille. Le procédé comporte enfin une troisième étape d'application d'un code correcteur d'erreurs en bloc sur les données contenues dans le conteneur, le code correcteur s'adaptant dynamiquement à la taille du conteneur.

## Description

La présente invention concerne un procédé et un système de transmission de données. Elle est utilisable en particulier dans le domaine des télécommunications satellitaires mais elle est également adaptable dans le domaine des télécommunications terrestres.

Dans le domaine des télécommunications satellitaire, en particulier pour la voie retour (la voie retour correspond aux transmissions entre le terminal utilisateur et une passerelle au sol via le satellite) ou pour une communication directe entre des terminaux via le satellite, la transmission de données sporadiques provoque une perte d'efficacité d'utilisation des ressources. En effet, cette transmission sporadique depuis un terminal utilisateur implique une agrégation faible des données sur ce terminal. Le débit de transmission est alors inférieur au débit maximal atteignable. Ceci est provoqué par la segmentation des paquets de données en un ensemble de fragments dans le but de s'adapter à la taille des conteneurs que la couche physique du satellite peut traiter. Un fragment est un sous ensemble d'un message de niveau supérieur (dans le cas où le protocole de communication utilise un modèle en couches). L'utilisation de fragments résulte du fait que la taille d'un message peut être supérieure à la taille maximale d'un conteneur. Dans ce cas, afin de transmettre le message, plusieurs fragments devront être constitués afin d'être transmis indépendamment les uns des autres. Une fois les fragments reçus, l'activité qui consiste à reconstituer le message original à partir de ces fragments est le réassemblage. Un conteneur est un réceptacle virtuel ayant une taille définie (en bits) pouvant accueillir des données dans le but de les transporter. Si la taille des paquets de données est différente de la taille de ces conteneurs ou qu'elle n'est pas un multiple de la taille de ces conteneurs (ce qui peut être fréquent), la segmentation des paquets nécessite l'ajout de symboles de bourrage ou « padding » en anglais. L'inefficacité de l'utilisation de la ressource introduite par l'ajout de ces symboles de bourrage peut atteindre près de 50 % (dans le cas d'un paquet de données ayant une taille tout juste supérieure à celle du conteneur). La taille fixe de ces conteneurs est généralement imposée par la couche physique appliquant un code correcteur d'erreurs.

Il est connu de l'état de la technique, comme par exemple dans l'article « Low-Density Parity-Check Convolutional Codes applied to packet based communication systems », de Z.Chen, IEEE Globecom 2005, l'utilisation de codes correcteurs d'erreur convolutifs, comme par exemple les codes LDPC-CC (acronyme anglais pour « Low Density Parity Check Convolutional Codes »), ayant de bonnes performances sans être dédiées à une taille fixe. Ces codes, à mémoire, nécessitent néanmoins l'insertion de séquences en amont et en aval des données à transmettre, faisant baisser les débits de manière identique aux bits de bourrage. Lorsque les paquets de données à coder sont de faible taille, ces séquences peuvent représenter une proportion importante des données à transmettre.

Il est également connu de l'état de la technique l'utilisation de codes correcteurs en bloc, dont les performances sont meilleures que celles des codes convolutifs. L'application d'un code correcteur d'erreurs en bloc est optimisée pour une taille de bloc donnée. Un bloc de données est l'ensemble des données qui ont été incluses dans le conteneur par la couche supérieure (complémenté par un en-tête ou un enfin éventuel).

Il est connu des modèles de communication et des procédés de transmission des données qui sont organisés en plusieurs couches. Par exemple le modèle OSI qui présente en particulier les couches réseau, liaison de données et physique. Dans ces systèmes, la taille des blocs de données gérés par la couche physique est fixée par les contraintes liées au codage, les contraintes du protocole d'accès au canal de communication et potentiellement à d'autres contraintes (plusieurs tailles discrètes peuvent cependant coexister dans un standard donné). Cependant la taille des paquets de la couche réseau et la taille des blocs de données de la couche physique ne sont pas forcément identiques ni même multiple l'une de l'autre du fait de la possible disparité de volume des informations à transporter. Cette différence de taille entre les paquets de la couche réseau et les blocs de données traités par la couche physique oblige la couche liaison de données à réaliser une segmentation qui peut nécessiter un fort taux d'ajout de symboles de bourrage entraînant une perte d'efficacité d'utilisation de la ressource (proche de 50% dans le pire cas).

Il est connu dans l'état de la technique, des procédés d'adaptation du rendement du code correcteur, comme dans la demande PCT WO 2010/022786 A1, afin d'adapter la taille des paquets à la taille des conteneurs. Cependant, ces procédés requierent l'utilisation de codes correcteurs très adaptables en rendement, et la transmission au décodeur de l'information sur le taux de codage utilisé.

Il est également connu dans l'état de la technique, comme par exemple dans la demande PCT WO 2007/064764 A2, des procédés et des systèmes dans lesquels la couche physique propose une pluralité de tailles de conteneurs différentes. La couche physique utilise donc un certain nombre de tailles de conteneurs prédéfinis dans lesquelles les données reçues des couches supérieures doivent être encapsulées. L'encapsulation consiste à intégrer le message de niveau supérieur au sein d'une entité de données du niveau concerné par l'ajout d'informations de contrôle (généralement par le biais d'un en-tête et potentiellement d'un enfin). Le processus inverse, permettant d'extraire le message en enlevant les informations de contrôle dans le but de le passer au niveau supérieur, s'appelle la désencapsulation. Une ou plusieurs tailles de conteneurs physiques peuvent être utilisées permettant ainsi :
- de s'adapter par exemple aux conditions de propagation du canal de transmission, dans le cas où un code correcteur d'erreurs n'est pas utilisé, ou
- de s'adapter aux contraintes d'accès à la ressource et aux performances de la forme d'onde dans le cas ou plusieurs débits symboles ou une forme d'onde adaptative sont utilisés.
Cependant ces différentes tailles de conteneurs (associés à des blocs codeurs) sont généralement en nombre limité (tailles disponibles non continues) et potentiellement décolérées de la taille des paquets gérés par les couches supérieures, ce qui ne permet donc pas de résoudre complètement le problème de la perte d'efficacité liée aux ajouts de symboles de bourrage lors de la segmentation de ces paquets.

Il est connu dans l'état de la technique un procédé connu sous le nom de VSP pour « Variable Size Packet » en anglais ou Paquet de taille variable en français qui utilise les différentes tailles de blocs définis dans la norme DVB-RCS pour améliorer l'efficacité d'encapsulation du niveau réseau vers le niveau physique. Cette solution, en plus de la complexité d'implémentation du codeur (plus de 10 entrelaceurs à stocker en mémoire du réseau de portes programmables in situ connu aussi sous le terme anglais de FPGA pour « field programmable gate array »), ne résout pas le problème de l'effet de seuil de l'encapsulation et de l'efficacité associée. Elle permet d'améliorer partiellement l'efficacité d'utilisation mais pas de supprimer complètement le bourrage comme la solution envisagée le propose.

La présente invention vise à remédier à ces problèmes en proposant un procédé de transmission des données évitant une perte d'efficacité provoquée en particulier par les ajouts de symboles de bourrage liés à la segmentation et à l'encapsulation des paquets.

Il est proposé, selon un aspect de l'invention un procédé de traitement de données dans un système de télécommunications satellitaires permettant une adaptation dynamique à la quantité de données à transmettre. Les données sont organisées en un ensemble de paquets contenus dans une première couche d'un modèle de communication. Le procédé comporte une première étape de passage d'une information, indiquant la taille de chaque paquet ou représentative de cette taille, entre la première couche et une deuxième couche. Il comporte aussi une deuxième étape d'encapsulation du paquet et de passage du paquet entre la première couche et la deuxième couche dans un conteneur, dont la taille est adaptée à l'information indiquant la taille d'un paquet ou représentative de cette taille. Le procédé comporte enfin une troisième étape d'application d'un code correcteur d'erreurs en bloc, sur les données contenues dans le conteneur, le code correcteur adaptant dynamiquement sa taille à la taille du conteneur.

La solution proposée permet donc de supprimer totalement l'ajout de symboles de bourrage lié à des segmentations de différentes tailles de paquets fournis par les niveaux supérieurs du processus de transmission. Pour ce faire l'invention propose de supprimer l'étape de segmentation et de modifier le code correcteur d'erreurs en bloc afin que celui-ci s'adapte à la taille des paquets de niveau supérieur qui ont été encapsulés précédemment. Ceci implique donc que le code s'adapte également dynamiquement à la taille de ces paquets qui lui sont fournis en entrée.

Avantageusement la troisième étape est adaptée pour utiliser un code correcteur d'erreurs quasi-cyclique à protographes. Pour ceci la taille d'une matrice de base associée au code quasi cyclique à protographe est adaptée dynamiquement à l'information indiquant la taille du paquet ou représentative de cette taille. Cette adaptation est réalisée en changeant un facteur d'extension associé à la matrice de base. Ainsi la taille de la matrice du code quasi cyclique à protographe sera adaptée à la taille du conteneur en changeant le facteur d'extension de la matrice de base de manière adéquate.

Un code quasi cyclique à protographe correspond à une version particulière des codes LDPC (Low Density Parity Check en Anglais). Un code LDPC est défini par une matrice de parité (creuse) *H*. La version quasi-cyclique, correspond à une forme particulière de la matrice de parité *H* (de taille *M* × *N*) dans laquelle une sous matrice *Hb* (matrice de base) de taille *p* × *p* est répétée dans la matrice *H*.

La matrice *H* a donc des dimensions correspondant à un multiple des dimensions de la matrice de base tel que *M* = *p***Z* et *N* = *p***Z*, *Z* correspondant au facteur d'extension.

Ces codes ont la particularité de pouvoir être caractérisé uniquement par la sous-matrice *Hb* (ou matrice de base), ce qui entraine un gain de place dans le réseau de portes programmables d'un facteur *Z*².

De plus, en stockant uniquement la matrice *H* de base *Hb*, il sera possible de modifier la taille de la matrice *H* en changeant le facteur z d'extension de la matrice *H* de base. Cela permet donc d'encoder des blocs de données de tailles différentes sans avoir à stocker un grand nombre de données sur un réseau de portes programmables mais uniquement la matrice de base.

La notion de protographe, connue de l'homme du métier, correspond à une représentation particulière simplifiée de la matrice de base définissant un motif de base permettant de générer cette matrice *Hb*.

L'utilisation de codes quasi-cycliques à protographes permet, par rapport à d'autres codes, d'obtenir une meilleure efficacité pour une pluralité de taille de paquets conteneurs ou fragments et ainsi une meilleure adaptabilité dynamique des codes. De plus la grande flexibilité de ces codes n'entraine pas une complexité calculatoire élevée, un besoin de ressources mémoires élevé et/ou un nombre de portes élevé dans le cadre d'une implémentation sur un réseau de portes programmables. Il est connu de l'homme du métier les codes quasi-cycliques basés sur des protographes ARA (pour Acumulate Repeat Acumulate en Anglais), ARJA (pour Accumulate Repeat Jagged Accumulate en anglais), IRA (pour Irregular Repeat Accumulate en anglais), E2RC (pour Efficiently-Encodable Rate-Compatible en anglais), G-LDPC (pour Generalized LDPC codes), etc. Ces codes permettent d'obtenir des taux d'erreurs paquets très faibles (< 10⁻⁶ dans le cas ou la distribution du bruit additionnel respecte une loi de probabilité gaussienne) y compris pour des petites tailles de paquets (< 600 bits), tout en conservant une complexité et un nombre de portes limités dans le cadre d'une implémentation sur un réseau de portes programmables. Ces codes sont par exemple utilisés pour le WiMAX (pour Worldwide Interoperability for Microwave Access en anglais) et ont alors une structure de type IRA. Ces codes sont aussi développés par l'organisme de standardisation connu sous l'acronyme anglais de CCSDS pour Consultative Committee for Space Data Systems et ont une structure de type ARJA.

Avantageusement, le dimensionnement du code correcteur d'erreurs réalisé lors de la troisième étape d'adaptation du code correcteur d'erreurs correspond exactement à la taille dudit conteneur. De cette manière, l'ajout de bits de bourrage permettant d'adapter la taille du conteneur à la taille du code correcteur d'erreurs n'est pas nécessaire.

Avantageusement, le dimensionnement du code correcteur d'erreurs réalisé lors de la troisième étape d'adaptation du code correcteur d'erreurs est effectué pour un rendement donné. Ainsi, l'adaptation du dimensionnement du code correcteur d'erreurs est réalisée pour un rendement donné, choisi en fonction de l'environnement (conditions de propagation, criticité des informations transmises, débit visé, etc...).

Avantageusement la troisième étape est réalisée par la couche physique.

Avantageusement la première et/ou la deuxième étape sont réalisées par la couche liaison de données.

Avantageusement la première et/ou la deuxième étape sont réalisées par la couche réseau.

Avantageusement le procédé comporte en outre une quatrième étape de segmentation réalisée dans la première couche.

Avantageusement le système de transmission de données comporte au moins un émetteur/récepteur caractérisé en ce que ledit émetteur/récepteur comporte des moyens pour exécuter les étapes du procédé décrit ci-dessus.

L'invention sera mieux comprise et d'autres avantages apparaîtront à la lecture de la description détaillée faite à titre d'exemple non limitatif et à l'aide des figures parmi lesquelles :
- La figure 1 présente un mode de réalisation du procédé suivant un aspect de l'invention.
- La figure 2 présente un autre mode de réalisation du procédé suivant un aspect de l'invention.

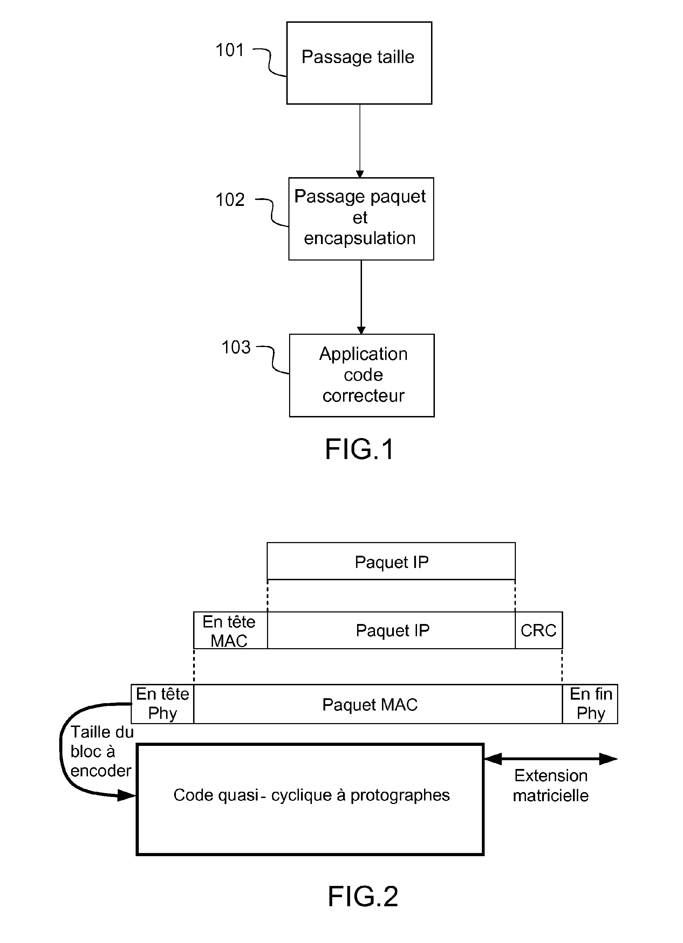

Le procédé présenté figure 1 traite des données qui sont organisées en différents paquets de taille pouvant être variable. Le procédé utilise des données qui sont utilisées par une première couche d'un modèle de communication. La première étape 101 consiste au passage d'une information représentative de la taille du paquet à traiter entre la première couche et une deuxième couche. Ensuite l'étape 102 consiste au passage de ce paquet entre la première couche et la deuxième couche. Cette étape permet aussi l'encapsulation des données contenues dans le paquet dans un conteneur. La taille du conteneur est adaptée à l'information représentative de la taille d'un paquet. Cette étape est réalisée dans la deuxième couche du modèle de communication. Ensuite l'étape 103 permet l'application d'un code correcteur d'erreurs en bloc sur les données contenues dans le conteneur. Les paramètres de dimensionnement utilisés pour l'application de ce code correcteur d'erreurs en bloc sont choisis en fonction de la taille du conteneur. Ces paramètres varient au cours du temps afin de s'adapter en permanence à la taille des conteneurs.

La figure 2 présente un mode de réalisation de l'invention dans le cas où le modèle de communication utilisé correspond à la pile protocolaire TCP/IP et que le procédé utilise au niveau de la couche physique un code quasi cyclique à protographes.

Dans cette figure, un paquet IP est encapsulé sans fragmentation dans un paquet de niveau MAC (pour Medium Access Control en anglais), comprenant un en-tête (ou « header » en anglais) et un enfin (ici un motif de CRC, pour Control de Redondance Cyclique).

Le paquet MAC est ensuite directement encapsulé dans une trame physique, contenant un en-tête (« header » en anglais) et un enfin (« trailer » en anglais). Le codeur adapte sa taille directement à la taille de la trame physique.

Dans un mode de réalisation du procédé le code correcteur utilisé est basé sur un code quasi-cyclique à protographes. L'utilisation de ces codes permet d'obtenir les meilleures performances car ces codes permettent une adaptation facile du code à la taille des paquets/conteneurs sur lesquels appliquer le code correcteur. La flexibilité de ce type de code, permet de réaliser cette extension matricielle en temps réel sans complexité supplémentaire ni besoins importants en espace mémoire ou en nombre de portes dans le cas de la réalisation du procédé sur un réseau de portes programmables in situ. Il est connu de l'homme du métier les codes quasi-cycliques basés sur des protographes (ARA, ARJA , IRA , E2RC, G-LDPC, etc.). Ces codes permettent d'obtenir des taux d'erreurs paquets très faibles (< 10⁻⁶ dans le cas où la distribution du bruit additionnel respecte une loi de probabilité gaussienne) y compris pour des petites tailles de paquets (< 600 bits), tout en conservant une complexité et un nombre de portes limités dans le cadre d'une implémentation sur un réseau de portes programmables. Ces codes sont par exemple utilisés pour le WiMAX et ont alors une structure de type IRA. Ces codes sont aussi développés par l'organisme de standardisation connus sous l'acronyme anglais de CCSDS pour Consultative Committee for Space Data Systems et ont une structure de type ARJA.

Dans un mode de réalisation du procédé le code correcteur utilisé est un turbo code. L'utilisation de ces codes permet une grande flexibilité dans la taille des paquets/conteneurs à traiter tout en gardant de bonnes performances. Cependant ces codes présentent l'inconvénient de devoir stocker un ensemble d'entrelaceurs pour s'adapter efficacement aux différentes tailles des paquets/conteneurs. Le stockage de cet ensemble d'entrelaceurs augmentant les besoins en espace mémoire ou en nombre de portes dans le cas de la réalisation du procédé sur un réseau de portes programmables in situ.

Dans un mode de réalisation la première étape 101 est réalisée par la couche liaison de données. La deuxième étape 102 est réalisée par la couche liaison de données. La troisième étape 103 est réalisée par la couche physique. Le procédé correspond donc à la mise en oeuvre d'une encapsulation directe des paquets reçus par la couche liaison de données dans des conteneurs de la couche physique. La couche physique s'adaptant dynamiquement à la taille des paquets reçus depuis la couche liaison de données pour l'application du code correcteur. Cette encapsulation directe a pour objectif de supprimer les ajouts de symboles liés à la fragmentation et à un éventuel ajout de symboles de bourrage et donc permet d'améliorer l'efficacité d'utilisation des ressources.

Dans un mode de réalisation (illustré sur la figure 2), le procédé est réalisé de la manière suivante. L'organisation des données en un premier ensemble de paquets est réalisée par la couche liaison de données, de type GSE pour Generic Stream Encapsulation en anglais ou RLE pour Return Link Encapsulation en anglais. Ces techniques d'encapsulation de niveau liaison de données permettent de s'adapter à un grand nombre de tailles de paquet de niveau supérieur sans nécessité de fragmentation. Les données reçues peuvent être organisées dans des paquets qui sont de type IP (Internet Protocol). Pour les différents paquets à transmettre, la détermination d'une ressource (pouvant être un intervalle temporel, une bande de fréquence) est effectuée. Cette détermination peut-être effectuée à la demande pendant l'utilisation du procédé ou bien avant l'utilisation du procédé. La première étape 101 permet le passage de la taille des paquets entre la couche liaison de données et la couche physique. La deuxième étape 102 permet le passage des paquets entre la couche liaison de données et la couche physique et l'encapsulation dans des conteneurs dont la taille dépend de la taille des paquets. Ensuite la troisième étape 103 d'application d'un code correcteur permet d'appliquer le code correcteur directement sur les données contenues dans les conteneurs, cette étape étant réalisée par la couche physique. Afin de réaliser cette application la taille du paquet est passée au mécanisme d'application du code correcteur d'erreurs en bloc afin de s'adapter dynamiquement à la taille du conteneur (par exemple grâce à l'utilisation d'un code quasi-cyclique permettant d'étendre sa matrice en temps réel pour s'adapter à la taille requise) et d'encoder la trame en utilisant le ratio de code (le ratio de code est le nombre de symboles dans un paquet avant application du code correcteur divisé par le nombre de symboles dans le même paquet après application du code correcteur) requis (qui peut également être variable si un mécanisme de code correcteur adaptatif est utilisé).

Dans un mode de réalisation il est possible d'ajouter une étape de segmentation des paquets, fournis par le niveau supérieur, afin que ceux-ci ne dépassent pas une taille maximale, en particulier pour permettre que le procédé puisse envoyer les données dans un intervalle temporel défini. L'étape d'application d'un code correcteur d'erreurs en bloc est alors adaptée pour que le dimensionnement du code correcteur soit réalisé à partir de la taille des conteneurs.

Dans un mode de réalisation le système et le procédé respectent la norme DVB-RCS (acronyme de Digital Video Broadcasting - Return Channel via Satellite en anglais). Dans ce cas le code correcteur d'erreurs utilise des turbo codes duo-binaires. Ces codes ont une certaines flexibilité concernant la taille des conteneurs, mais les performances varient grandement en fonction des tailles des paquets à encoder, notamment au niveau taux d'erreur paquet atteignable par le code. Cependant dans un mode de réalisation et en en relâchant les performances que doit atteindre la couche physique (i.e en envisageant que des performances en termes de taux d'erreur paquet comprises entre 10⁻⁴ et 10⁻⁵ suffisent), il est possible de modifier le turbocode afin qu'il puisse s'adapter dynamiquement à la taille des paquets traités. Cependant dans ce mode de réalisation, il est nécessaire de stocker les paramètres de l'entrelaceur du turbo code pour toutes les tailles envisageables (choisir des paramètres d'entrelaceurs aléatoires ou communs entre deux tailles pouvant avoir un effet négatif sur les performances du code, en particulier sur la distance minimale dont dépend le plancher d'erreur, en effet le plancher d'erreur d'un turbo-code est directement lié à la distance de Hamming du code, comme cela est connu de l'homme du métier). En conséquence, compte tenu de l'algorithme de génération de l'entrelaceur du code (qui nécessite 4 paramètres pour la génération), et s'il est nécessaire de stocker les paramètres de l'entrelaceur pour toutes les tailles possibles comprises entre 77 et 1500 (soit donc 1423 tailles) cela revient à stocker en mémoire sur un réseau de portes programmables in situ plus de 5600 caractères uniquement pour les entrelaceurs d'un turbo codes. Afin de limiter le nombre de caractères à mémoriser, il est possible dans un autre mode de réalisation, de remplacer le turbo code par un code cyclique à protographes. Dans ce mode de réalisation l'empreinte mémoire du code correcteur correspond à la taille de la matrice du code cyclique à protographes soit 240 caractères (12 * 20) (dans le cas de l'utilisation d'un code de type ARJA, défini par l'organisme de standardisation CCSDS, dont la taille de la matrice *H* de base correspond à 12 * 20 = 240 caractères).

Dans un autre mode de réalisation le procédé et le système respectent la norme DVB-S2 (acronyme anglais désignant l'évolution du standard DVB-S : Digital Video Broadcasting - Satellite). Dans ce cas, les codes utilisés sont des codes quasi-cycliques à protographes de type extended-IRA. Cependant dans le système ou procédé connu seulement trois tailles sont envisagées pour les paquets traités par la couche physique. Dans un mode de réalisation, il est possible de modifier la couche physique afin de rendre flexible la taille des paquets utilisés en modifiant les facteurs d'extension afin d'obtenir la taille de paquet souhaité. Il faudrait pour cela changer la matrice *H* du code LDPC par une matrice *H* quasi-cyclique et jouer sur le facteur d'extension.

Dans un autre mode de réalisation le procédé et le système respectent une norme de télécommunication terrestre WiMAX. Dans cette norme le code correcteur d'erreurs utilisé par défaut est un turbo code, qui n'est pas flexible en terme de taille des paquets. Dans un mode de réalisation il est donc possible de modifier ce code correcteur d'erreurs afin par exemple de le remplacer par un code quasi-cyclique à protographes utilisant les paramètres de taille pouvant être utilisés par la norme.

Dans l'ensemble des modes de réalisation présentés dans les trois paragraphes précédents la couche liaison de données n'a plus besoin d'effectuer une segmentation des paquets reçus, lors de l'encapsulation des données dans les conteneurs physiques. Ces paquets reçus des couches supérieures sont donc directement traités et l'application du code correcteur d'erreurs est réalisée directement sur ces paquets.

Dans un mode de réalisation un ou plusieurs émetteurs/récepteurs terrestres ainsi qu'un satellite permettent d'utiliser le procédé tel que décrit dans les différents modes de réalisation, dans les paragraphes ci-dessus. Les différentes étapes du procédé peuvent être réalisées par exemples sur un processeur générique, un processeur spécifique, un circuit intégré propre à une application (connu aussi sous le nom anglais d'ASIC pour « Application-Specific Integrated Circuit ») ou un réseau de portes programmables in situ.

## Revendications

1. Procédé de traitement de données dans un système de télécommunications, lesdites données étant organisées en un ensemble de paquets contenus dans une première couche d'un modèle de communication, ledit procédé étant **caractérisé par** :
- une première étape (101) de passage d'une information indiquant la taille d'un paquet ou représentative de cette taille d'un paquet entre ladite première couche et une deuxième couche,
- une deuxième étape (102) de passage dudit paquet entre ladite première couche et ladite deuxième couche et d'encapsulation dudit paquet dans un conteneur, dont la taille est adaptée à ladite information indiquant la taille d'un paquet ou représentative de cette taille, ledit conteneur appartenant à ladite deuxième couche,
- une troisième étape (103) de dimensionnement de la taille d'un code correcteur en blocs en fonction de la taille dudit conteneur, et d'application dudit code correcteur d'erreurs en bloc sur les données contenues dans ledit conteneur.

2. Procédé selon la revendication 1 dans lequel ladite troisième étape utilise un code correcteur d'erreurs en bloc de type code quasi-cyclique à protographes, de plus ladite troisième étape est adaptée pour modifier dynamiquement une taille d'une matrice de base associée audit code quasi cyclique à protographes à partir de la taille du conteneur, cette modification dynamique de la taille de la matrice étant réalisée en changeant un facteur d'extension associé à ladite matrice.

3. Procédé selon l'une des revendications précédentes dans lequel le dimensionnement du code correcteur d'erreurs réalisé lors de la troisième étape (103) d'adaptation du code correcteur d'erreurs correspond exactement à la taille dudit conteneur.

4. Procédé selon l'une des revendications précédentes dans lequel le dimensionnement du code correcteur d'erreurs réalisé lors de la troisième étape (103) d'adaptation du code correcteur d'erreurs est effectué pour un rendement donné.

5. Procédé selon l'une des revendications précédentes dans lequel ladite troisième étape est réalisée par la couche physique.

6. Procédé selon l'une des revendications précédentes dans lequel ladite première étape et/ou ladite deuxième étape sont réalisées par la couche liaison de données.

7. Procédé selon l'une des revendications 1 à 5 dans lequel ladite première étape et/ou ladite deuxième étape sont réalisées par la couche réseau.

8. Procédé selon l'une des revendications précédentes comportant en outre une quatrième étape de segmentation réalisée dans ladite première couche.

9. Système de transmission de données comportant au moins un émetteur/récepteur **caractérisé en ce que** ledit émetteur/récepteur comporte des moyens pour exécuter les étapes du procédé selon au moins une des revendications 1 à 8.
